(19) Europäisches Patentamt
European Patent Office
Office européen des brevets

(11) EP 4 636 142 A1

(12) **EUROPEAN PATENT APPLICATION**
published in accordance with Art. 153(4) EPC

(43) Date of publication:
**22.10.2025 Bulletin 2025/43**

(21) Application number: **23903396.2**

(22) Date of filing: **07.12.2023**

(51) International Patent Classification (IPC):
***D01F 6/84*** *(2006.01)* ***D01F 6/62*** *(2006.01)*

(52) Cooperative Patent Classification (CPC):
**D01F 6/62; D01F 6/84**

(86) International application number:
**PCT/JP2023/043770**

(87) International publication number:
**WO 2024/128109 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2022 JP 2022199789**

(71) Applicant: **Kuraray Co., Ltd.**
**Kurashiki-shi, Okayama 710-0801 (JP)**

(72) Inventors:
- **FUJITA, Naoki**
  **Kurashiki-shi, Okayama 713-8550 (JP)**
- **TSUJIMOTO, Takuya**
  **Kurashiki-shi, Okayama 713-8550 (JP)**
- **KUSUDO, Kazumasa**
  **Okayama-shi, Okayama 702-8601 (JP)**

(74) Representative: **Müller-Boré & Partner Patentanwälte PartG mbB**
**Friedenheimer Brücke 21**
**80639 München (DE)**

# (54) LIQUID CRYSTAL POLYESTER FIBER, AND METHOD FOR PRODUCING SAME

(57) Provided is a liquid crystal polyester fiber excellent in tensile strength and compressive strength, as well as in disc fatigue resistance. The liquid crystal polyester fiber has a melting point of 335°C or higher and lower than 360°C as measured by a differential scanning calorimeter under a nitrogen atmosphere at a temperature elevation rate of 10°C/min, and has a degree of crystallinity of from 45 to 60%, and a total number of unmelted particles and voids having a long diameter of 5 μm or larger is 3 or less per 5 cm length of a single fiber. For example, the liquid crystal polyester fiber may have a degree of orthorhombic crystallinity of 20% or more in a crystal component.



Processed by Luminess, 75001 PARIS (FR)

## Description

CROSS REFERENCE TO THE RELATED APPLICATION

This application is based on and claims Convention priority to Japanese patent application No. 2022-199789, filed December 14, 2022, the entire disclosure of which is herein incorporated by reference as a part of this application.

FIELD OF THE INVENTION

The present invention relates to a liquid crystal polyester fiber and a method for producing the same.

BACKGROUND OF THE INVENTION

A liquid crystal polyester fiber is a fiber made from a liquid crystal polyester having a rigid molecular structure and is known to exhibit the highest strength among synthetic fibers obtained by melt-spinning, because in the melt-spinning, molecular chains are highly oriented in a fiber axis direction, and then the obtained as-spun fiber is subjected to heat treatment at a high temperature for a long time. The liquid crystal polyester fiber is also known to have improved heat resistance and dimensional stability because the heat treatment increases a molecular weight and a melting point of the liquid crystal polyester fiber. Such a liquid crystal polyester fiber can be used for applications such as general industrial materials, civil engineering and construction materials, various reinforcing materials, electrical and electronic component materials, and protective clothing. For example, in the case of reinforcing material application, mechanical properties are required, and in the case of electronic component application such as board materials for circuit boards, in addition to the mechanical properties required as reinforcing materials, heat resistance for heat processing during component mounting is also required.

Patent Document 1 (WO2019/142692) describes that by heat-treating a liquid crystal polyester fiber having an orientation degree of the liquid crystal polyester of 89% or more and 95% or less in the length direction of the fiber at a temperature of 250°C or higher, it is possible to obtain a highly strengthened liquid crystal polyester fiber having a tensile strength of 25 cN/dtex or more and 30 cN/dtex or less.

Patent Document 2 (JP Laid-open Patent Publication No. 2010-43380) discloses a material for producing fiber including a liquid crystal polyester having a structural unit derived from an aromatic hydroxycarboxylic acid, a structural unit derived from an aromatic dicarboxylic acid, and a structural unit derived from an aromatic diol, as repeating units, 40 mol% of which are 2,6-naphthalenediyl groups, and having a flow start temperature of 280 to 320°C, and describes that a liquid crystal polyester fiber having high heat resistance can be obtained.

Patent Document 3 (JP Laid-open Patent Publication No. 2022-6590) describes a production method in which a liquid crystal polyester is processed into fiber form by a melt-spinning method and then the obtained fiber is heated at a temperature of 330°C or higher, and describes a liquid crystal polyester fiber having a maximum crystallite size value of $120 \times 10^{-10}$ m or more and higher heat resistance.

CONVENTIONAL ART DOCUMENT

PATENT DOCUMENT

[Patent Document 1] WO2019/142692
[Patent Document 2] JP Laid-open Patent Publication No. 2010-43380
[Patent Document 3] JP Laid-open Patent Publication No. 2022-6590

SUMMARY OF THE INVENTION

PROBLEMS TO BE SOLVED BY THE INVENTION

However, while a liquid crystal polyester fiber is strong against a stress in a tensile direction, the liquid crystal polyester fiber is relatively weak against a stress in a compressive direction, and depending on the application, further improvements in mechanical properties are required. For example, regarding reinforcing fibers used for rubber materials such as tires, timing belts, and rubber hoses, forces are applied not only in the tensile direction but also in the compressive direction of the fiber axis, so that high strength and fatigue resistance are required for both stresses.

In Patent Document 1, regarding the mechanical properties of the liquid crystal polyester fiber, it is described that

the tensile strength is improved, but there is still room for further improvement in the tensile strength, and compressive strength and fatigue resistance are not described.

In Patent Document 2, it is described that the liquid crystal polyester can be easily fiberized by allowing the viscosity of the liquid crystal polyester to be lowered during melt-spinning so as to obtain a fiber having high heat resistance, and the fiber-drawing property of the liquid crystal polyester is evaluated, but the physical properties of the obtained fiber are not evaluated, and the mechanical properties are not described.

In Patent Document 3, it is described that the melting point of the liquid crystal polyester fiber is increased, but the mechanical properties of the actually obtained liquid crystal polyester fiber are not described.

An object of the present invention is to solve the above problems and to provide a liquid crystal polyester fiber not only having excellent tensile strength and compressive strength but also having excellent fatigue resistance to tensile deformation and compressive deformation.

MEANS FOR SOLVING THE PROBLEMS

The inventors of the present invention have conducted extensive studies in order to achieve the aforementioned object, and found that, depending on a liquid crystal polyester used as a raw material and conditions during melt-spinning for a liquid crystal polyester fiber, unmelted particles and voids occur in the fiber, and these defects cause deterioration in mechanical properties of the fiber. Then, as a result of further study, the inventors of the present invention have found that by using a liquid crystal polyester having a specific weight-average molecular weight and melting point and by adjusting conditions in an extruder and a spinning temperature condition so as to load a shear stress on a molten resin for melt-kneading and spinning the liquid crystal polyester, the occurrence of unmelted particles and voids can be suppressed as well as high orientation can be achieved. Furthermore, the inventors of the present invention have found that by heat-treating the highly oriented as-spun fiber with few unmelted particles and voids, a liquid crystal polyester fiber having an increased melting point and degree of crystallinity as well as not only having sufficient tensile strength and compressive strength but also having excellent fatigue resistance in a disc fatigue test in which tensile deformation and compressive deformation are alternately applied (hereinafter sometimes referred to as "disc fatigue resistance") can be obtained, leading to the completion of the present invention.

That is, the present invention may include the following aspects.

[Aspect 1]

A liquid crystal polyester fiber having a melting point of 335°C or higher and lower than 360°C (preferably 337°C or higher and 358°C or lower, and more preferably 340°C or higher and 355°C or lower) as measured by a differential scanning calorimeter under a nitrogen atmosphere at a temperature elevation rate of 10°C/min, and having a degree of crystallinity of from 45 to 60% (preferably 46 to 58%, and more preferably 48 to 55%),
wherein a total number of unmelted particles and voids having a long diameter of 5 μm or larger is 3 or less (preferably 2 or less, and more preferably 1 or less) per 5 cm length of a single fiber.

[Aspect 2]

The liquid crystal polyester fiber according to aspect 1, having a degree of orthorhombic crystallinity of 20% or more (preferably 26% or more, and more preferably 27% or more) in a crystal component.

[Aspect 3]

The liquid crystal polyester fiber according to aspect 1 or 2, having a degree of orientation of 97% or more and less than 100% in a fiber axis direction in a crystal component.

[Aspect 4]

The liquid crystal polyester fiber according to any one of aspects 1 to 3, having a tensile strength of 27 cN/dtex or more (preferably 28 cN/dtex or more, and more preferably 30 cN/dtex or more).

[Aspect 5]

The liquid crystal polyester fiber according to any one of aspects 1 to 4, having a single fiber compressive strength of 0.70 cN/dtex or more (preferably 0.75 cN/dtex or more, and more preferably 0.80 cN/dtex or more).

[Aspect 6]

The liquid crystal polyester fiber according to any one of aspects 1 to 5, having a single fiber fineness of 7 dtex or less and a coefficient of variation of the single fiber fineness of 7% or less (preferably 6% or less, and more preferably 5% or less).

[Aspect 7]

A fiber structure at least partially including the liquid crystal polyester fiber as recited in any one of aspects 1 to 6.

[Aspect 8]

A composite material including the liquid crystal polyester fiber as recited in any one of aspects 1 to 6 as a reinforcing fiber.

[Aspect 9]

A method for producing the liquid crystal polyester fiber as recited in any one of aspects 1 to 6, the method at least including:

spinning a liquid crystal polyester to obtain an as-spun fiber, the liquid crystal polyester having a weight-average molecular weight of 50000 or more and 160000 or less (preferably 60000 or more and 150000 or less, and more preferably 80000 or more and 130000 or less) as measured by GPC in terms of polystyrene and a melting point $Mp_0$ of 300°C or higher (preferably 300 to 340°C, and more preferably 305 to 330°C) as measured by a differential scanning calorimeter under a nitrogen atmosphere at a temperature elevation rate of 10°C/min, and the spinning satisfying the following conditions (1) to (3):

(1) an extruder temperature is from $Mp_0$ + 15°C to $Mp_0$ + 35°C (preferably from $Mp_0$ + 16°C to $Mp_0$ + 30°C, and more preferably from $Mp_0$ + 17°C to $Mp_0$ + 25°C),
(2) a screw circumferential speed of an extruder is from 10 to 40 m/min (preferably from 15 to 35 m/min, and more preferably from 17 to 25 m/min), and
(3) a spinneret temperature is from the extruder temperature - 15°C to the extruder temperature - 5°C; and

heat-treating the obtained as-spun fiber.

[Aspect 10]

The method according to aspect 9, wherein the extruder is a twin-screw extruder.

[Aspect 11]

The method according to aspect 9 or 10, wherein a heat treatment temperature is from 250 to 350°C (preferably 255 to 320°C, more preferably 260 to 315°C, and further preferably 280 to 310°C).

As used herein, the singular forms, "a," "an", and "the" are intended to include plural forms including "at least one", unless the content clearly indicates otherwise. As used herein, the terms "and/or", "at least one", and "one or more" include any and all combinations of the relevant listed items.

Any combination of at least two constructions, disclosed in the appended claims and/or the specification should be construed as included within the scope of the present invention. In particular, any combination of two or more of the appended claims should be equally construed as included within the scope of the present invention.

EFFECT OF THE INVENTION

The liquid crystal polyester fiber according to the present invention has excellent tensile strength and compressive strength as well as has excellent disc fatigue resistance.

DESCRIPTION OF EMBODIMENT

[Liquid Crystal Polyester Fiber]

The liquid crystal polyester fiber according to the present invention includes a liquid crystal polyester. The liquid crystal polyester includes structural units derived from, for example, aromatic diols, aromatic dicarboxylic acids, aromatic hydroxycarboxylic acids, etc. As long as the effect of the present invention is not impaired, the structural units derived from aromatic diols, aromatic dicarboxylic acids, and aromatic hydroxycarboxylic acids are not limited to a specific chemical composition. The liquid crystal polyester may include the structural units derived from aromatic diamines, aromatic hydroxy amines, or aromatic aminocarboxylic acids in the range which does not impair the effect of the present invention. For example, preferable structural units may include units shown in Table 1.

[Table 1]

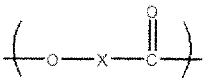 , 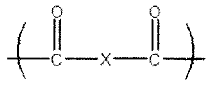 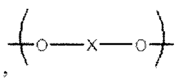 , 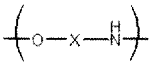

In the formula, X is selected from the following

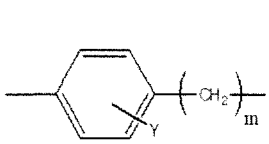 , 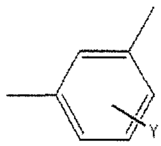 , 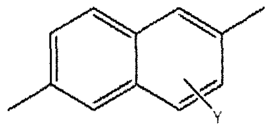 ,

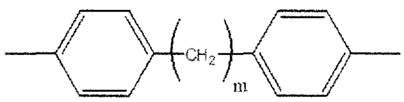 , 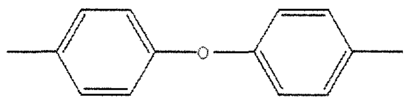 , ,

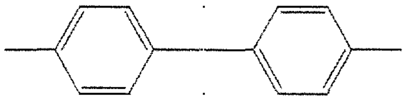 , 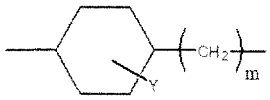 , 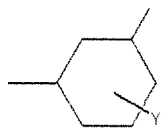

m is an integer from 0 to 2, Y is a substituent selected from hydrogen atom, halogen atoms, alkyl groups, aryl groups, aralkyl groups, alkoxy groups, aryloxy groups, aralkyloxy groups.

In the structural units in Table 1, m is an integer from 0 to 2, and Y in the formula independently represents, as from one substituent to the number of substituents in the range of the replaceable maximum number of aromatic ring, a hydrogen atom, a halogen atom (for example, fluorine atom, chlorine atom, bromine atom and iodine atom), an alkyl group (for example, an alkyl group having 1 to 4 carbon atoms such as methyl group, ethyl group, isopropyl group and t-butyl group), an alkoxy group (for example, methoxy group, ethoxy group, isopropoxy group, n-butoxy group, etc.), an aryl group (for example, phenyl group, naphthyl group, etc.), an aralkyl group [for example, benzyl group (phenylmethyl group), phenethyl group (phenylethyl group), etc.], an aryloxy group (for example, phenoxy group, etc.), an aralkyloxy group (for example, benzyloxy group, etc.), and others.

As more preferable structural units, there may be mentioned structural units as described in Examples (1) to (20) shown in the following Tables 2, 3, and 4. It should be noted that where the structural unit in the formula is a structural unit which can show a plurality of structures, combination of two or more types may be used as structural units for a polymer.

[Table 2]

| |
|---|
| (1) 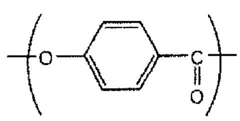 , 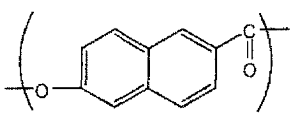 |

(continued)

(2)

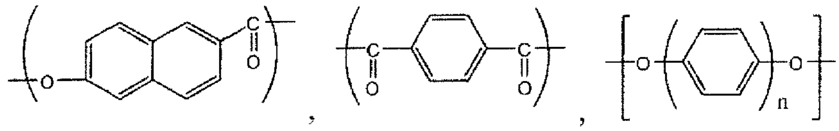

(3)

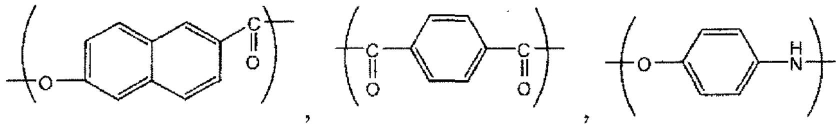

(4)

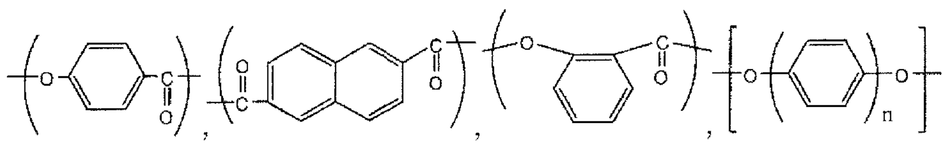

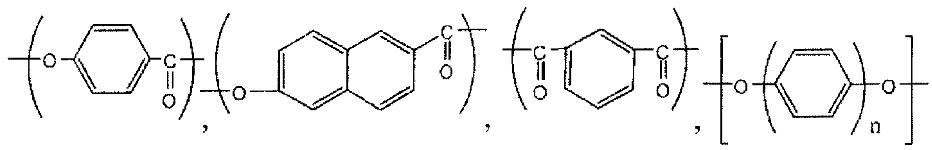

(5)

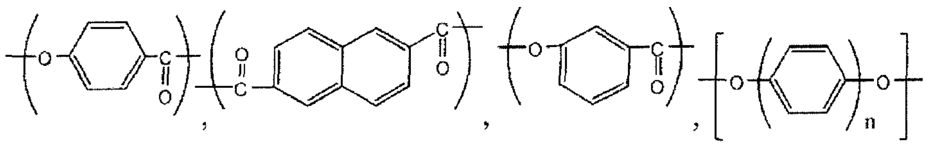

(6)

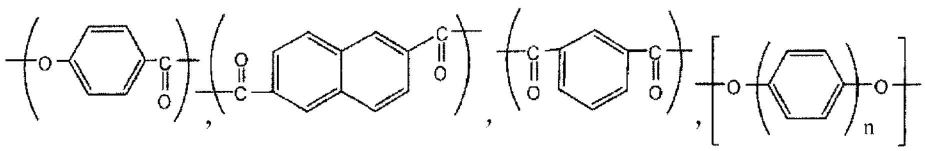

(7)-

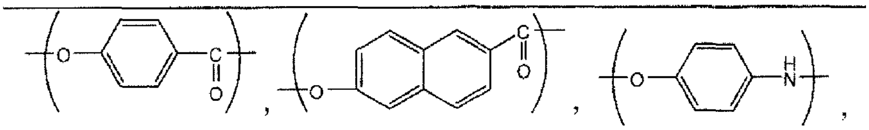

(8)

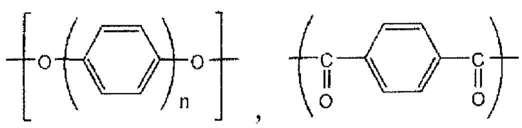

[Table 3]

| |
|---|
| (9)<br>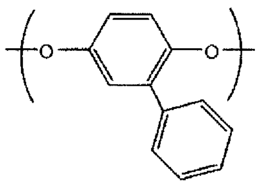 , 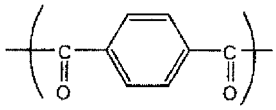 |
| (10)<br>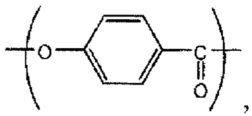 , 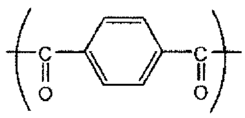 , 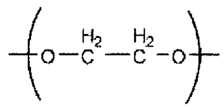 |
| (11)<br>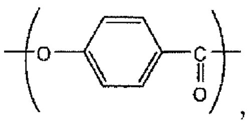 , 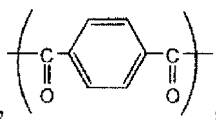 , 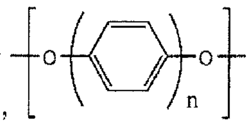 , 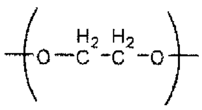 |
| (12)<br>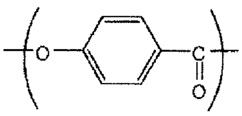 , 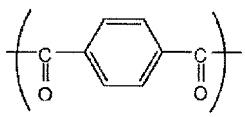 , 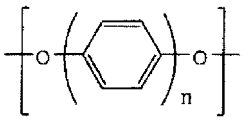 |
| (13)<br>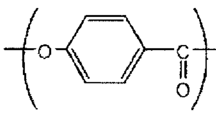 , 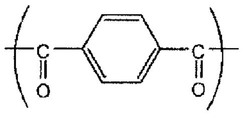 , 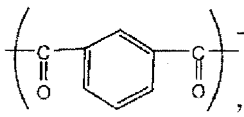 , 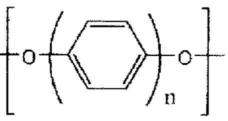 |
| (14)<br>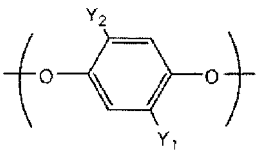 , 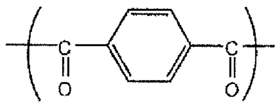 , 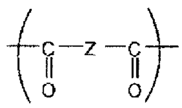 |
| (15)<br>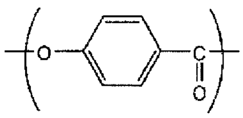 , 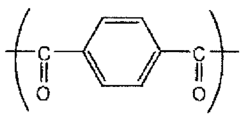 , 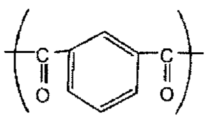 ,<br>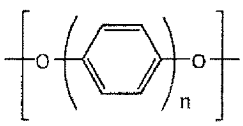 , 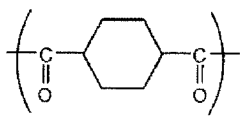 |

[Table 4]

(16)

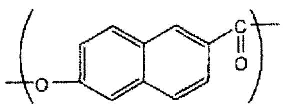,
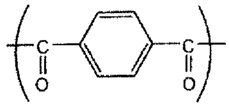,
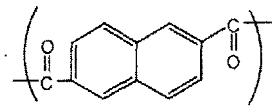,
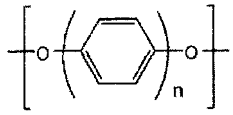

(17)

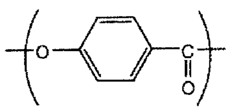,
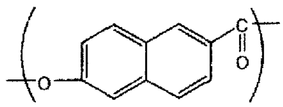,
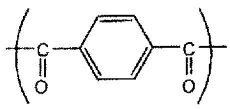,
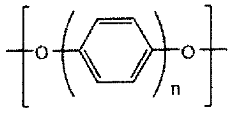

(18)

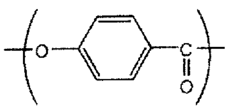,
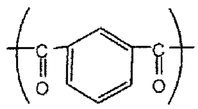,
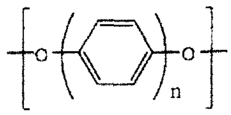

(19)

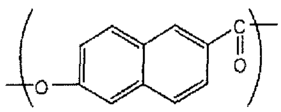,
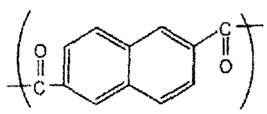,
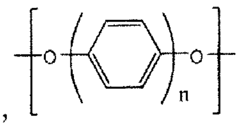

(20)

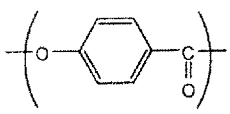,
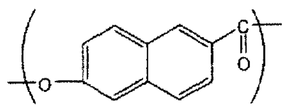,
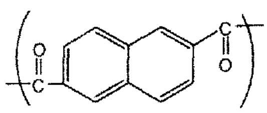,
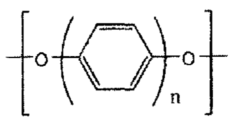

In the structural units shown in Tables 2, 3, and 4, n is an integer of 1 or 2, among each of the structural units, n = 1 and n = 2 may independently exist, or may exist in combination; each of the $Y_1$ and $Y_2$ independently represents, a hydrogen atom, a halogen atom (for example, fluorine atom, chlorine atom, bromine atom, iodine atom, etc.), an alkyl group (for example, an alkyl group having 1 to 4 carbon atoms such as methyl group, ethyl group, isopropyl group, and t-butyl group, etc.), an alkoxy group (for example, methoxy group, ethoxy group, isopropoxy group, n-butoxy group, etc.), an aryl group (for example, phenyl group, naphthyl group, etc.), an aralkyl group [for example, benzyl group (phenylmethyl group), phenethyl group (phenylethyl group), etc.], an aryloxy group (for example, phenoxy group, etc.), an aralkyloxy group (for example, benzyloxy group, etc.), and others. Among these, the preferable one may include a hydrogen atom, a chlorine atom, a bromine atom, and a methyl group.

Z may include substitutional groups denoted by following formulae.

[Chem. 1]

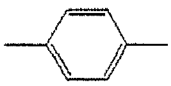 , 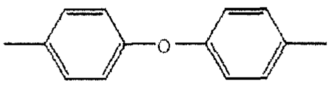 , 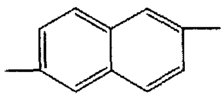 .

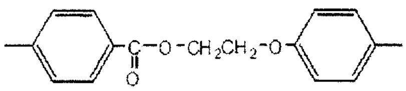 , 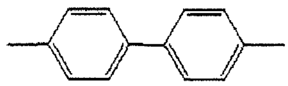

The liquid crystal polyester may preferably include a structural unit represented by the following formula (I) (structural unit (I)), a structural unit represented by the following formula (II) (structural unit (II)), and at least one structural unit selected from the group consisting of a structural unit represented by the following formula (III) (structural unit (III)) and a structural unit represented by the following formula (IV) (structural unit (IV)).

$-O-Ar^1-CO-$ (I)

$-CO-Ar^2-CO-$ (II)

$-O-Ar^3-O-$ (III)

$-O-Ar^4-NH-$ (IV)

(wherein $Ar^1$ represents at least one group selected from the group consisting of a phenylene group, a naphthylene group, and a biphenylylene group, each of $Ar^2$, $Ar^3$, and $Ar^4$ independently represents at least one group selected from the group consisting of a phenylene group, a naphthylene group, a biphenylylene group, and a diphenyl ether diyl group, and hydrogen atoms in each aromatic ring in $Ar^1$, $Ar^2$, $Ar^3$, and $Ar^4$ may be independently substituted with a halogen atom, an alkyl group, an alkoxy group, an aryl group, an aralkyl group, an aryloxy group, or an aralkyloxy group)

The structural unit (I) is a structural unit derived from an aromatic hydroxycarboxylic acid, and may be preferably a structural unit in which $Ar^1$ is a 1,4-phenylene group (structural unit derived from 4-hydroxybenzoic acid) and a structural unit in which $Ar^1$ is a 2,6-naphthylene group (structural unit derived from 6-hydroxy-2-naphthoic acid).

The structural unit (II) is a structural unit derived from an aromatic dicarboxylic acid, and may be preferably a structural unit in which $Ar^2$ is a 1,4-phenylene group (structural unit derived from terephthalic acid), a structural unit in which $Ar^2$ is a 1,3-phenylene group (structural unit derived from isophthalic acid), a structural unit in which $Ar^2$ is a 2,6-naphthylene group (structural unit derived from 2,6-naphthalenedicarboxylic acid), and a structural unit in which $Ar^2$ is a diphenyl ether-4,4'-diyl group (structural unit derived from diphenyl ether-4,4'-dicarboxylic acid).

The structural unit (III) is a structural unit derived from an aromatic diol, and may be preferably a structural unit in which $Ar^3$ is a 1,4-phenylene group (structural unit derived from hydroquinone), a structural unit in which $Ar^3$ is a 4,4'-biphenylylene group (structural unit derived from 4,4'-dihydroxybiphenyl), a structural unit in which $Ar^3$ is a phenyl-1,4-phenylene group (structural unit derived from phenylhydroquinone), and a structural unit in which $Ar^3$ is a diphenyl ether-4,4'-diyl group (structural unit derived from 4,4'-dihydroxydiphenyl ether).

The structural unit (IV) is a structural unit derived from an aromatic hydroxy amine, and may be preferably a structural unit in which $Ar^4$ is a 1,4-phenylene group (structural unit derived from 4-aminophenol) and a structural unit in which $Ar^4$ is a 4,4'-biphenylylene group (structural unit derived from 4-amino-4'-hydroxybiphenyl).

A content of the structural unit (I) in the liquid crystal polyester based on a total content of all the structural units may be 20 to 80 mol%, preferably 30 to 75 mol%, and more preferably 40 to 70 mol%.

A content of the structural unit (II) in the liquid crystal polyester based on a total content of all the structural units may be 10 to 40 mol%, preferably 12.5 to 35 mol%, and more preferably 15 to 30 mol%.

A total content of the structural units (III) and (IV) in the liquid crystal polyester based on a total content of all the structural units may be 10 to 40 mol%, preferably 12.5 to 35 mol%, and more preferably 15 to 30 mol%.

From the viewpoint of making it easier to increase a molecular weight of the liquid crystal polyester to improve the mechanical properties, a molar ratio of the content of the structural unit (II) to the total content of the structural units (III) and (IV), as (II)/[(III) + (IV)], may be 90/100 to 100/90, preferably 95/100 to 100/95, more preferably 98/100 to 100/98, and further preferably 100/100.

The liquid crystal polyester may include two or more types of each of the structural units (I) to (IV). The content of each structural unit represents the total content of all structural units corresponding to the structural unit, and, for example, in the case where the liquid crystal polyester includes two or more types of the structural unit (I), the content of the structural unit (I) represents the total content of these types.

In the liquid crystal polyester, the total content of the structural units (I) to (IV) based on the total content of all the structural units may be, for example, 90 mol% or more, preferably 95 mol% or more, more preferably 99 mol% or more, and further preferably 100 mol%.

From the viewpoint of having a highly crystalline structure to increase the melting point and the degree of crystallinity, the liquid crystal polyester preferably has a combination including a structural unit having a naphthalene skeleton. For example, a total content of a structural unit including a 2,6-naphthylene group in the liquid crystal polyester based on the total content of all the structural units may be 40 mol% or more, preferably 50 mol% or more, more preferably 65 mol% or more, further preferably 68 mol% or more, and even more preferably 70 mol% or more, and may be 90 mol% or less, preferably 85 mol% or less, more preferably 83 mol% or less, and further preferably 80 mol% or less. As the structural unit including the 2,6-naphthylene group, a structural unit (I) in which $Ar^1$ is a 2,6-naphthylene group (structural unit derived from 6-hydroxy-2-naphthoic acid) and a structural unit (II) in which $Ar^2$ is a 2,6-naphthylene group (structural unit derived from 2,6-naphthalenedicarboxylic acid) are preferable.

It should be noted that the liquid crystal polyester fiber may contain thermoplastic polymers, such as a polyethylene terephthalate, a modified-polyethylene terephthalate, a polyolefin, a polycarbonate, a polyamide, a polyphenylene sulfide, a polyether ether ketone, a fluoro-resin, and others, as long as the effects of the present invention are not impaired. In addition, the liquid crystal polyester fiber may contain various additives including: inorganic substances such as titanium oxide, kaolin, silica, and barium oxide; carbon black; a colorant such as dyes and paints; an antioxidant; an ultraviolet-ray absorbent; a light stabilizer; etc.

The liquid crystal polyester fiber according to the present invention may contain a liquid crystal polyester at a proportion of 50 wt% or more, preferably 80 wt% or more, more preferably 90 wt% or more, still more preferably 95 wt% or more, and even more preferably 99.9 wt% or more.

The liquid crystal polyester fiber according to the present invention has a melting point of 335°C or higher and lower than 360°C as measured by a differential scanning calorimeter under a nitrogen atmosphere at a temperature elevation rate of 10°C/min. The liquid crystal polyester fiber according to the present invention has a high melting point and excellent heat resistance. The melting point of the liquid crystal polyester fiber may be preferably 337°C or higher and 358°C or lower, and more preferably 340°C or higher and 355°C or lower. The melting point of the liquid crystal polyester fiber is a value measured by the method described in Examples below.

The liquid crystal polyester fiber according to the present invention has a degree of crystallinity of 45 to 60%. The liquid crystal polyester fiber according to the present invention has a degree of crystallinity in a specific range and thus has excellent mechanical properties. If the degree of crystallinity is excessively low, an orientation in the fiber axis direction is low, so that the tensile strength and the compressive strength tend to deteriorate. On the other hand, if the degree of crystallinity is excessively high, toughness is impaired, so that the compressive strength and the disc fatigue resistance tend to deteriorate. The degree of crystallinity of the liquid crystal polyester fiber may be preferably 46 to 58%, and more preferably 48 to 55%. In the present specification, the degree of crystallinity of the liquid crystal polyester fiber is calculated from diffraction peaks derived from each crystal in an X-ray diffraction profile obtained by wide-angle X-ray diffraction measurement (e.g., diffraction peaks appearing around diffraction angles $2\theta$ = 19 to 21°, $2\theta$ = 27°, etc.), and is a value measured by the method described in Examples below.

In the liquid crystal polyester fiber according to the present invention, the total number of unmelted particles and voids having a long diameter of 5 $\mu$m or larger is 3 or less per 5 cm length of a single yarn. In the present specification, the unmelted particles are materials originating from the liquid crystal polyester that has not melted during spinning and has remained unmelted, generally mean microcrystals having a different orientation from that of crystals which are oriented in the fiber axis direction, and can be observed by a polarized light microscopy. The voids are residual decomposition gas generated from a resin during spinning or residual bubbles generated due to poor melt-kneading, mean bubbles which exist inside the fiber or on the side surface of the fiber, and can be observed by a microscopy using transmitted light.

The liquid crystal polyester fiber according to the present invention has not only a degree of crystallinity in a specific range but also few unmelted particles and voids, and thus has excellent mechanical properties. If the unmelted particles or voids exist in the fiber, the portion thereof is a locally weak defect portion, and thus when a force in the tensile direction is applied, the fiber may break starting from this portion, resulting in a decrease in the tensile strength. On the other hand, it is known that when a force in the compressive direction is applied to a liquid crystal polyester fiber, buckling deformation called a kink band occurs, resulting in a decrease in strength. The kink band is likely to occur starting from the unmelted particles or voids, resulting in a decrease in compressive strength. In addition, since the unmelted particles and voids are defects that occur during spinning, the single fiber fineness is likely to change due to the presence of such defects (in particular, voids), so that the uniformity of the obtained fiber is likely to be impaired.

In the case where these unmelted particles and voids are included in a predetermined size, these are likely to cause a decrease in mechanical properties and/or uniformity of the fiber. Thus, according to the present invention, unmelted particles and voids having a long diameter (maximum diameter) of 5 $\mu$m or larger are targeted for measurement. The total number of unmelted particles and voids having a long diameter of 5 $\mu$m or larger included per 5 cm length of a single yarn may be preferably 2 or less, and more preferably 1 or less. The total number of unmelted particles and voids is a

value measured by the method described in Examples below. In the case where short fibers having a fiber length of the liquid crystal polyester fiber of less than 5 cm are targeted, the total number of unmelted particles and voids having a long diameter of 5 μm or larger included per 5 cm length can be measured by observing a plurality of short fibers that together make up 5 cm, and counting the number of unmelted particles and voids having a long diameter of 5 μm or larger in the plurality of short fibers.

The liquid crystal polyester fiber according to the present invention may have a degree of orthorhombic crystallinity of 20% or more in a crystal component. The liquid crystal polyester has a crystal component such as an orthorhombic or hexagonal crystal system, and if the degree of orthorhombic crystallinity in these crystal components is high, heat resistance and mechanical properties tend to be able to be further improved. The degree of orthorhombic crystallinity can be adjusted by the composition of the liquid crystal polyester used, production conditions such as spinning conditions and heat treatment conditions. The degree of orthorhombic crystallinity may be preferably 26% or more, and more preferably 27% or more. On the other hand, the upper limit of the degree of orthorhombic crystallinity is not particularly limited to a specific one, and may be, for example, 35% or less. In the present specification, the degree of orthorhombic crystallinity of the liquid crystal polyester fiber is calculated from diffraction peaks derived from orthorhombic and hexagonal crystals in an X-ray diffraction profile obtained by wide-angle X-ray diffraction measurement (e.g., diffraction peaks appearing around a diffraction angle $2\theta$ = 19 to 21°, etc.), and is a value measured by the method described in Examples below.

The liquid crystal polyester fiber according to the present invention may have a degree of orientation of 97% or more and less than 100% in the fiber axis direction in the crystal component. The degree of orientation is an index of the degree to which the crystal component is oriented in the fiber axis direction, and the higher the degree of orientation is, the more the mechanical properties tend to be able to be improved. In the present specification, the degree of orientation of the liquid crystal polyester fiber is calculated from an azimuth angle profile obtained by wide-angle X-ray diffraction measurement, and is a value measured by the method described in Examples below.

The liquid crystal polyester fiber according to the present invention may have a tensile strength of 27 cN/dtex or more, preferably 28 cN/dtex or more, and more preferably 30 cN/dtex or more. On the other hand, the upper limit of the tensile strength is not particularly limited to a specific one, and may be, for example, about 40 cN/dtex. The tensile strength of the liquid crystal polyester fiber is a value measured by the method described in Examples below.

The liquid crystal polyester fiber according to the present invention may have a single fiber compressive strength of 0.70 cN/dtex or more, preferably 0.75 cN/dtex or more, and more preferably 0.80 cN/dtex or more. On the other hand, the upper limit of the compressive strength is not particularly limited to a specific one, and may be, for example, about 1.5 cN/dtex. The compressive strength of the liquid crystal polyester fiber is a value measured by the method described in Examples below.

The liquid crystal polyester fiber according to the present invention may have a strength retention rate of 50% or more, preferably 55% or more, and more preferably 60% or more in the disc fatigue test by the method described in Examples below.

The liquid crystal polyester fiber according to the present invention may have an adjusted single fiber fineness depending on the application, etc. The single fiber fineness, for example, may be 50 dtex or less, preferably 15 dtex or less, and more preferably 10 dtex or less, and from the viewpoint of adapting to downsizing in electronic component application, etc., the single fiber fineness is preferably a low fineness and may be, for example, 7 dtex or less. On the other hand, the lower limit of the single fiber fineness is not particularly limited to a specific one, and may be, for example, about 0.01 dtex. The single fiber fineness is a value measured by the method described in Examples below.

The liquid crystal polyester fiber according to the present invention may have a coefficient of variation of the single fiber fineness of 7% or less, preferably 6% or less, and more preferably 5% or less. In electronic component application, etc., there is a demand for thinner fibers and fabrics as products are downsized, and in the case of a smaller single fiber diameter, the uniformity of the fiber is particularly required, and thus it is preferable that the variation of the single fiber fineness is small even if the fineness is low. The coefficient of variation of the single fiber fineness can be calculated from a formula of the standard deviation ($\sigma$) of the single fiber fineness / single fiber fineness (average value) (x) $\times$ 100, and is a value measured by the method described in Examples below.

The liquid crystal polyester fiber according to the present invention may be a monofilament or a multifilament. In the case of multifilament, the number of filaments may be adjusted depending on the application, etc. For example, the number of filaments may be 2 to 5000 filaments, preferably 3 to 4000 filaments, and more preferably 5 to 3000 filaments.

The total fineness of the liquid crystal polyester fiber according to the present invention may be adjusted depending on the application, etc. For example, the total fineness may be 50000 dtex or less, preferably 10000 dtex or less, more preferably 2000 dtex or less, and further preferably 600 dtex or less. From the viewpoint of adapting to downsizing in electronic component application, etc., the total fineness is preferably a low fineness and may be, for example, 300 dtex or less. On the other hand, the lower limit of the total fineness is not particularly limited to a specific one, and may be, for example, about 1 dtex.

[Method for Producing Liquid Crystal Polyester Fiber]

A method for producing the liquid crystal polyester fiber according to the present invention may at least include:

spinning a liquid crystal polyester to obtain an as-spun fiber, the liquid crystal polyester having a weight-average molecular weight of 50000 or more and 160000 or less as measured by GPC in terms of polystyrene and a melting point $Mp_0$ of 300°C or higher as measured by a differential scanning calorimeter under a nitrogen atmosphere at a temperature elevation rate of 10°C/min, and the spinning satisfying the following conditions (1) to (3):

(1) an extruder temperature is from $Mp_0$ + 15°C to $Mp_0$ + 35°C,
(2) a screw circumferential speed of an extruder is from 10 to 40 m/min, and
(3) a spinneret temperature is from the extruder temperature - 15°C to the extruder temperature - 5°C; and

heat-treating the obtained as-spun fiber.

According to the present invention, use of a liquid crystal polyester, which has a specific weight-average molecular weight and melting point, as a raw material resin makes it easier to increase the degree of crystallinity in the spinning step and the heat-treating step, and thus it is possible to obtain a liquid crystal polyester fiber having a high degree of crystallinity and melting point as a fiber after the heat treatment.

Meanwhile, the inventors of the present invention have found that use of such a liquid crystal polyester are likely to cause the unmelted particles and voids in the obtained fiber. That is, a liquid crystal polyester having a relationship that the melting point is high for the specific weight-average molecular weight tends to have a low melt viscosity, so that it is difficult to apply a shear force to the liquid crystal polyester during melt-kneading, resulting in remaining the unmelted particles as foreign materials without being completely melted. On the other hand, in the case where the melt-kneading temperature is set high in order to reduce the unmelted particles, decomposition gas is generated, causing the voids. The occurrence of these unmelted particles and/or voids can lead to frequent breakages of the fibers during spinning, which makes it difficult to stably obtain a uniform fiber and can also cause the improvement in the degree of crystallinity of the fiber to be hindered. Furthermore, the inventors of the present invention have also found that this liquid crystal polyester has a low melt viscosity, which makes it difficult to discharge stably and easily causes unevenness in fineness, as well as makes it difficult to apply a shear force to the liquid crystal polyester during discharging, so that it is difficult to orient it highly and to increase the degree of crystallinity.

Therefore, according to the present invention, the shear force is applied to the liquid crystal polyester at a temperature at which the generation of decomposition gas is prevented and the liquid crystal polyester does not deteriorate by adjusting a temperature and a screw circumferential speed at an extruder so as to promote melting, thereby suppressing the occurrence of unmelted particles and voids. Furthermore, by adjusting a spinneret temperature to be lower than the temperature at the extruder located on the upstream side of the spinneret in a specific relationship, the viscosity of the liquid crystal polyester can be increased to stabilize the discharge, thereby suppressing unevenness in fineness, as well as the shear force can be applied for orientation during discharging, thereby promoting crystallization. As described above, according to the present invention, even when the liquid crystal polyester having the specific weight-average molecular weight and melting point is used as the raw material, it is made possible to obtain the above-described liquid crystal polyester fiber by adjusting the spinning conditions to reduce the unmelted particles and voids as well as to adjust crystallinity, and heat-treating an as-spun fiber obtained by the adjusted spinning conditions.

The liquid crystal polyester used in the present invention may have the weight-average molecular weight of preferably 50000 or more and 160000 or less, more preferably 60000 or more and 150000 or less, and further preferably 80000 or more and 130000 or less. The liquid crystal polyester having such a weight-average molecular weight has high mobility of molecular chains, so that the molecular chains are densely packed during heat treatment to easily increase the degree of crystallinity. In the present specification, the weight-average molecular weight is determined as a weight-average molecular weight in terms of polystyrene by gel permeation chromatography (GPC), and is a value measured by the method described in Examples below.

The liquid crystal polyester used in the present invention may preferably have a melting point (hereinafter sometimes referred to as $Mp_0$) of 300°C or higher, more preferably 300 to 340°C, and further preferably 305 to 330°C. Use of a liquid crystal polyester having such a melting point as the raw material enables to improve the melting point of the liquid crystal polyester fiber after the heat treatment, resulting in the improvement in the heat resistance thereof. In the present specification, the melting point refers to a main endothermic peak temperature determined and observed using a differential scanning calorimeter (DSC) in accordance with the JIS K 7121 test method. Specifically, 4 to 6 mg of a sample is encapsulated in an aluminum pan and taken into the DSC device. Then, the temperature is elevated at a rate of 10°C/min from room temperature (e.g., 25°C) while supplying nitrogen as a carrier gas at a flow rate of 200 mL/min to measure an endothermic peak. Depending on the type of polymer, some polymers may not show a clear peak in the 1st run

of DSC measurement. If no clear peak appears in the 1st run of DSC measurement, the sample is heated up to a temperature 50°C higher than the expected flow temperature in a temperature elevation rate of 50°C/min. After keeping the temperature for 3 minutes so as to make the sample completely molten, the sample is cooled at a cooling rate of 80°C/min to 50°C, and then is elevated at 10°C/min to measure the endothermic peak thereof.

The liquid crystal polyester used in the present invention may have a melt viscosity of, for example, 3 to 28 Pa·s, preferably 4 to 25 Pa·s, and more preferably 5 to 20 Pa·s at a shear rate of 1216 $sec^{-1}$ at a temperature of $Mp_0$ + 15°C. The melt viscosity is a value measured by the method described in Examples below.

The liquid crystal polyester used in the present invention may be a liquid crystal polyester having the above-described structural units. From the viewpoint of obtaining a liquid crystal polyester fiber having further improved heat resistance and mechanical properties, the liquid crystal polyester preferably has a combination including a structural unit having a naphthalene skeleton, and may be more preferably a liquid crystal polyester in which the total content of the structural unit including the 2,6-naphthylene group based on the total content of all the structural units is 40 mol% or more.

The liquid crystal polyester can be synthesized by a known polycondensation method. Examples of monomers for polycondensation may include various aromatic hydroxycarboxylic acids, aromatic dicarboxylic acids, aromatic diols, and aromatic hydroxy amines, and hydroxy group acylates and carboxylic acid derivatives such as carboxyl group esters, acid halides, and acid anhydrides by activating the end thereof.

Polycondensation may be performed in the presence of various polymerization catalysts, such as organotin-based catalysts (dialkyl tin oxide, etc.), antimony-based catalysts (antimony trioxide, etc.), titanium-based catalysts (titanium dioxide, etc.), alkali metal salts or alkaline earth metal salts of carboxylic acids (potassium acetate, etc.), and Lewis acids ($BF_3$, etc.).

The above-described thermoplastic polymers and various additives may be added to the liquid crystal polyester, as long as the effects of the present invention are not impaired.

In the spinning step, the liquid crystal polyester is fed into the extruder and is melt-kneaded by rotation of the screw while being heated in the extruder. Then, the melt-kneaded material is metered by a gear pump, conveyed to a spinning head, and discharged through the spinneret. The obtained yarn is wound, whereby an as-spun fiber can be obtained.

In the extruder, heating can be performed by a known heating means such as a heater, and relative to the melting point $Mp_0$ of the liquid crystal polyester, the extruder temperature may be from $Mp_0$ + 15°C to $Mp_0$ + 35°C, preferably from $Mp_0$ + 16°C to $Mp_0$ + 30°C, and more preferably from $Mp_0$ + 17°C to $Mp_0$ + 25°C. By adjusting the extruder temperature to be in such a range, melting of the liquid crystal polyester can be promoted in a range where the generation of decomposition gas is prevented and the liquid crystal polyester does not deteriorate. In the present specification, the extruder temperature means the maximum temperature in the extruder.

In addition to the heat transfer from the heating means of the extruder, the shear force is applied between the screw and an inner wall of a cylinder (barrel) and/or between the screws by the rotation of the screw. The circumferential speed of the screw may be 10 to 40 m/min, preferably 15 to 35 m/min, and more preferably 17 to 25 m/min. By adjusting the circumferential speed to such a speed, mechanical energy can be applied in a range where the liquid crystal polyester does not deteriorate, so as to promote melting of the liquid crystal polyester. That is, in the case where the screw circumferential speed is the above lower limit or higher, sufficient kneading is possible and melting can be promoted, so that the unmelted particles are less likely to remain. In the case where the screw circumferential speed is the above upper limit or lower, bubbles are less likely to be entrained in the kneaded resin and thus the voids are less likely to remain, as well as the heat generated by the shear force does not become excessively high and thus the generation of decomposition gas and the resin deterioration are less likely to be caused.

From the viewpoint of suppressing the deterioration and decomposition of the resin, the total residence time in an apparatus from the time when the liquid crystal polyester is fed into the extruder to the time when the liquid crystal polyester is discharged from the spinneret may be 60 minutes or shorter, preferably 40 minutes or shorter, and more preferably 30 minutes or shorter.

In the extruder, bubbles may be included during melt-kneading due to the generation of gas by decomposition, air entrainment, etc. Thus, from the viewpoint of suppressing the occurrence of voids, it is preferable to carry out degassing by, for example, installing a vent in the extruder, connecting a vacuum pump or the like to the vent, and reducing the pressure in the extruder. For example, the degree of vacuum in absolute pressure may be 100 kPa or lower, preferably 80 kPa or lower, and more preferably 60 kPa or lower.

As the extruder, known extruders such as single-screw extruders and multi-screw extruders (twin- or more-screw extruders) can be used, and twin-screw extruders are preferable from the viewpoint of improving kneadability and degassability.

The melt-kneaded material obtained by melt-kneading in the extruder is fed to the spinning head and is discharged from the spinneret at a specific temperature. The spinneret temperature may be from the extruder temperature - 15°C to the extruder temperature - 5°C. By adjusting the spinneret temperature to be lower than the temperature of the extruder located on the upstream side of the spinning head so as to have a specific relationship between the extruder

temperature and the spinneret temperature, the viscosity of the liquid crystal polyester during discharging can be increased to stabilize the discharge, as well as the shear force can be applied to promote oriented crystallization. In addition, the spinneret temperature relative to the melting point $Mp_0$ of the liquid crystal polyester may be from $Mp_0$ + 5°C to $Mp_0$ + 15°C.

Melt-spinning can be performed by a known or common method, and the melt-kneaded material can be discharged from the spinneret having the above specific spinneret temperature, and wound by a godet roller or the like to obtain an as-spun fiber.

By performing heat treatment on the as-spun fiber, solid-phase polymerization of the liquid crystal polyester can be advanced, and the melting point increases from the melting point (Mp) of the as-spun fiber, thereby improving the degree of crystallinity. In the heat-treating step, the method of the heat treatment is not particularly limited to a specific one, and may be, for example, a batch-type heat treatment or a continuous heat treatment by conveyance. The melting point (Mp) of the as-spun fiber can be measured by the same method as for the melting point of the liquid crystal polyester fiber.

For example, the batch-type heat treatment may be carried out in a state where the as-spun fiber is wound onto a bobbin in the form of a package, or in a state of hank as well as tow. The heat treatment may be preferably carried out in a package because it can be carried out in simpler equipment and improved productivity. The bobbin needs to be endurable to a temperature of solid phase polymerization, and may be preferably from a metal, such as aluminum, brass, iron, and stainless steel.

In the case of the continuous heat treatment by conveyance, the conveyance method may be carried out by either contact conveyance (for example, a conveyor type, a support roll type, a heated roller type), or non-contact conveyance (a roll-to-roll type). The processing course may be linear or nonlinear, and may be arranged using a folding roller and/or a guide to suitably change a length, an angle, a curvature of processing course, etc.

For the heat-treating step, a publicly known method can be used, and examples thereof include atmosphere heating, contact heating, and other heating procedure. Preferable atmosphere may include an atmosphere such as air, inactive gas (for example, nitrogen, argon), or a combined air thereof. In addition, there is no problem even if the heat treatment is carried out under vacuum.

In the heat-treating step, the heat treatment temperature may be from 250 to 350°C, preferably from 255 to 320°C, more preferably from 260 to 315°C, and further preferably from 280 to 310°C. By setting the heat treatment temperature to be in such a range, the degree of crystallinity can be appropriately increased. In addition, in order to prevent a heat-treated fiber from being fused during heat treatment, the heat treatment temperature may be lower than the melting point (Mp) of the as-spun fiber to be subjected to the heat-treating step. For example, the heat treatment temperature may be, in the range of 250 to 350°C, Mp - 50°C or higher and lower than Mp°C, preferably Mp - 40°C or higher and lower than Mp°C, and more preferably Mp - 30°C or higher and lower than Mp°C. In the heat-treating step, since the liquid crystal polyester fiber enables to enhance the melting point with progress of solid phase polymerization, it is sufficient to carry out the heat-treating step at a first heat treatment temperature of less than the melting point (Mp) of the as-spun fiber. From the viewpoint of efficient strength improvement, the heat treatment temperature may be step-wisely raised in accordance with progress of solid phase polymerization, so that the heat treatment may be carried out at a temperature beyond the melting point (melting point of as-spun fiber) at the time of starting the heat-treating step.

Depending on heat treatment procedure and/or the heat treatment temperature, a heat treatment period of the heat-treating step may be set as appropriate. For example, the heat treatment period may be set in the range of from 15 minutes to 30 hours, preferably from 2 to 24 hours, and more preferably from 3 to 20 hours. Here, the heat treatment period indicates a retention time at a predetermined heat treatment temperature (e.g., the maximum temperature).

In the method for producing the liquid crystal polyester fiber according to the present invention, a strength ratio of the liquid crystal polyester fiber before and after the heat-treating step may be 1.5 times or more, preferably 1.8 times or more, and more preferably 2.0 times or more. The upper limit of the strength ratio of the liquid crystal polyester fiber before and after the heat-treating step is not particularly limited to a specific one, and may be, for example, 10 times or less. Here, the strength ratio before and after the heat-treating step refers to a value obtained by dividing the tensile strength of the liquid crystal polyester fiber after the heat-treating step by the tensile strength of the liquid crystal polyester fiber (as-spun fiber) before the heat-treating step.

In the method for producing the liquid crystal polyester fiber according to the present invention, for example, in order to improve bundling properties of fibers and to prevent fibers from fusion during the heat treatment, a known oil agent may be applied before the heat-treating step.

[Fiber Structure]

The liquid crystal polyester fiber according to the present invention can be used as a reinforcing fiber for producing a composite material. In the case of using the liquid crystal polyester fiber as a reinforcing fiber, a fiber structure at least partially including the liquid crystal polyester fiber can be used as an intermediate material in the production of the composite material.

The fiber structure including the liquid crystal polyester fiber according to the present invention can be used as various fiber configurations such as staple fibers, short-cut fibers, filament yarns, spun yarns, cordage, ropes, etc., and also used as various fabrics such as nonwoven fabrics, woven fabrics, and knitted fabrics, using the liquid crystal polyester fibers. Such fibers and fabrics can be produced by known methods using the liquid crystal polyester fibers.

The fiber structure according to the present invention may be made by combining the liquid crystal polyester fibers with other fibers as long as the effects of the present invention are not impaired. The fiber structure may be, for example, a combined yarn using the liquid crystal polyester fibers and other fibers (e.g., a commingled yarn made from the liquid crystal polyester fibers and other fibers, or others). The fiber structure may also be a blend fabric using the liquid crystal polyester fibers and other fibers (e.g., a combined fabric in which the liquid crystal polyester fibers and other fibers are used in combination, a layered material in which a fabric of the liquid crystal polyester fibers and a fabric of other fibers are used in combination, or others). In the case of using the fiber structure to produce a composite material, the fiber structure may be a combined yarn or blend fabric, including heat-fusible fibers which form the matrix of the composite material as other fibers.

The liquid crystal polyester fiber according to the present invention can be used in various forms of fiber structures for various applications such as general industrial materials, civil engineering and construction materials, various reinforcing materials, electrical and electronic component materials, and protective clothing. For example, the liquid crystal polyester fiber according to the present invention can be used as various fiber products including tension members (e.g., electric cables, optical fibers, etc.), heater wire core yarns, cords for various electrical products such as earphone cords, ropes, sling belts, climbing ropes, life lines, fishing lines, fishing nets, longlines, land nets (safety nets, nets for golf practice ranges, etc.), catheters, reinforcing materials for plastics, concrete, and rubber, base cloth for printed circuit boards, sailcloth, protective clothing, and protective gloves. In particular, the liquid crystal polyester fiber having a low fineness (e.g., a single fiber fineness of 7 dtex or less) can be used for electronic component application such as base cloth for printed circuit boards.

[Composite Material]

According to the present invention, the composite material may be any material which can be obtained by using the liquid crystal polyester fiber as a reinforcing fiber and molding a matrix resin. The liquid crystal polyester fiber can be molded using the above fiber structure.

As the matrix resin, a resin generally used for composite materials can be used, and a thermosetting resin or a thermoplastic resin can be used. Examples of the thermosetting resin include epoxy-based resins, unsaturated polyester-based resins, vinyl ester-based resins, bismaleimide-based resins, phenolic-based resins, urea-based resins, melamine-based resins, thermosetting polyimide-based resins, thermosetting polyurethane-based resins, and benzoxazine-based resins. The type of the thermoplastic resin is not particularly limited to a specific one as long as a softening temperature of the thermoplastic resin is lower than the melting point of the liquid crystal polyester fiber according to the present invention, and examples of the thermoplastic resin include: vinyl-based resins (polymers or derivatives obtained from monomers having vinyl groups $CH_2$=CH- or vinylidene groups $CH_2$=C<); polyamide-based resins such as aliphatic polyamide-based resins (polyamide 6, polyamide 66, polyamide 11, polyamide 12, polyamide 610, polyamide 612, etc.), and semi-aromatic polyamide-based resins; polyester-based resins such as polyethylene terephthalate, polytrimethylene terephthalate, polybutylene terephthalate, and polyethylene naphthalate; fluorine-containing resins such as polytetrafluoroethylene-based resins; polysulfone-based resins such as polysulfonic-based resins and polyethersulfic-based resins; polyether ketone-based resins such as polyether ketone-based resins, polyether ether ketone-based resins, and polyether ketone ketone-based resins; polycarbonate-based resins; polyphenylene ether-based resins; amorphous polyarylate-based resins; and liquid crystal polyester-based resins such as wholly aromatic polyester-based resins.

## EXAMPLES

Hereinafter, the present invention will be demonstrated by way of some examples that are presented only for the sake of illustration, which are not to be construed as limiting the scope of the present invention. It should be noted that in the following Examples and Comparative Examples, various properties were evaluated in the following manners.

(Weight-Average Molecular Weight)

Using a mixed solvent of pentafluorophenol and chloroform with pentafluorophenol/chloroform of 1/2 (weight ratio) as a solvent, a liquid crystal polyester was dissolved such that the concentration thereof in the solvent was 0.03 wt%, to prepare a sample for GPC measurement. This sample was measured using a high-speed GPC system ("HLC-8420GPC", produced by Tosoh Corporation) under the following conditions to determine a weight-average molecular weight in terms of standard polystyrene.

Column: TSK gel guardcolumn SuperH-L 4.6 mm × 3.5 cm, one column

TSK gel SuperH2000 6.0 mm ID × 15 cm, one column
TSK gel SuperHM-H 6.0 mm ID × 15 cm, two columns

Detector: RI detector
Temperature: 40°C
Flow rate: 0.6 mL/min
Injection volume: 100 μL

(Melting Point of Resin Chips (Granular Molded Bodies) and Fibers)

In accordance with JIS K 7121, measurement was performed using a differential scanning calorimeter (DSC; "DSC60A Plus", produced by SHIMADZU CORPORATION), and the observed main endothermic peak temperature was determined as a melting point. Specifically, 4 to 6 mg of a sample was taken and sealed in an aluminum pan in the DSC device, and then, the temperature was elevated at a rate of 10°C/min from 25°C while supplying nitrogen as a carrier gas at a flow rate of 200 mL/min to measure an endothermic peak derived from the liquid crystal polyester.

(Melt Viscosity of Resin Chips (Granular Molded Bodies))

A melt viscosity of a raw material resin was measured using a melt viscosity measuring device (Capilograph 1C, produced by Toyo Seiki Seisaku-Sho, Ltd.). The cylinder of the device was filled with resin chips, and the melt viscosity was measured at a shear rate of 1216 $sec^{-1}$ at a temperature of $Mp_0$ + 15°C using a capillary of 1.00 mmφ × 10 mm wherein $Mp_0$ denotes the melting point of liquid crystal polyester (the melting point of the liquid crystal polyester of the resin chips measured above).

(Degree of Crystallinity)

A wide-angle X-ray diffraction (WAXD) measurement was performed by setting a liquid crystal polyester fiber in a holder dedicated for fibers, and irradiating the liquid crystal polyester fiber with X-rays in a direction perpendicular to a fiber axis under the following measurement conditions by a transmission method.

Measurement device: "D8 Discover IμS", produced by Bruker
Detector: two-dimensional PSPC·VANTEC-500
X-ray source: Cu
Current: 1 mA
Voltage: 50 kV
Time of exposure to light: 10 minutes
Collimator diameter: 0.5 mm
Camera length: 17 cm
Detector position (2θ): 20°
Sample position (ω): 10°
Tilt angle (Ψ): 90°
Measurement temperature: room temperature (about 25°C)

An X-ray diffraction profile with a horizontal axis as a diffraction angle (2θ) and a vertical axis as intensity was obtained under the following conditions.

Integration range: 2θ = 5 to 35°, γ (azimuth angle) = 250 to 290°
Step width: 0.05° (diffraction angle)

In the obtained X-ray diffraction profile, two values at 2θ = 5° and 35° were connected by a straight line to set a baseline. Based on this newly set baseline, the profile was converted into profile data with the difference in intensity along the vertical axis from an actual measured data to the baseline as new intensity.

An amorphous peak was fitted to the profile data after baseline correction using a pseudo-Voigt function (Lorentz function ratio: α = 0) with a peak height, a peak top position, σ, and an asymmetry parameter as variables. At this time, an initial value of the peak top position of the fitting function was set to around 20.6°. A peak area of this fitting function was determined as an amorphous amount (D).

Crystal peaks were fitted to a peak A (peak top position: around 19°), a peak B (peak top position: around 20.5°), and a peak C (peak top position: around 27°) of the profile data after baseline correction using the following functions with a peak height, a peak top position, and σ as variables. All of the crystal peaks were assumed to be symmetrical.

Peak A: pseudo-Voigt function (α = 1)
Peak B: pseudo-Voigt function (α = 0)
Peak C: pseudo-Voigt function (α = 0.5)

Then, fitting was performed by the least-squares method such that the difference between the sum of all fitting functions, including the fitting function for the amorphous peaks obtained above, and the profile data after baseline correction was minimized. The peak areas of these fitting functions were determined as crystal amounts (A), (B), and (C), respectively.
Using the above amorphous amount and crystal amounts, a degree of crystallinity was calculated from the following formula.

$$\text{Degree of crystallinity (\%)} = \{(A) + (B) + (C)\}/\{(A) + (B) + (C) + (D)\} \times 100$$

(Degree of Orthorhombic Crystallinity)

A degree of orthorhombic crystallinity was calculated from the following formula, using the crystal amount (A) of the peak A derived from the hexagonal crystal and the crystal amount (B) of the peak B derived from the orthorhombic crystal, which were determined from the X-ray diffraction profile (profile data after baseline correction) in the above measurement of the degree of crystallinity.

$$\text{Degree of orthorhombic crystallinity (\%)} = (B)/\{(A) + (B)\} \times 100$$

(Degree of Orientation)

In the above wide-angle X-ray diffraction measurement under the measurement conditions for the degree of crystallinity, an azimuth angle profile with a horizontal axis as an azimuth angle (γ) and a vertical axis as intensity was obtained under the following conditions.

Integration range: γ = 225 to 315°, 2θ = 19.0 to 21.0°
Step width: 0.5°

In the obtained azimuth angle profile, two values at γ = 225° and 315° were connected by a straight line to set a baseline. Based on this newly set baseline, the profile was converted into profile data with the difference in intensity along the vertical axis from an actual measured data to the baseline as new intensity.
A half width of a peak identified in the profile data after baseline correction was determined. Using the half width of the peak, a degree of orientation (%) was calculated from the following formula.

$$\text{Degree of orientation (\%)} = (180 - \text{half width})/180 \times 100$$

(Number of Voids)

One single fiber was taken from liquid crystal polyester fibers (multifilament), and microscopy using transmitted illumination was performed in the range of a fiber length of 5 cm using a microscope ("ECLIPSE Ci-E", produced by Nikon Corporation) to count the number of voids having a long diameter (maximum diameter) size of 5 μm or larger. The number of voids was counted for five single fibers, and the average number thereof was regarded as the number of voids having a long diameter of 5 μm or larger included per 5 cm of a single fiber.

(Number of Unmelted Particles)

For the same sample used for the above void measurement, polarized light microscopy (crossed Nicol) was

performed. Specifically, using the same microscope, a polarizer "sensitive color polarization polarizer unit C-TP" and an analyzer "sensitive color polarization analyzer unit C-IA" were set on the upper and lower sides of a stage of the microscope, and the sample was observed with the transmission axes of the polarizer and the analyzer made orthogonal to each other (crossed Nicol). Since the liquid crystal polyester fiber is highly oriented and has optical anisotropy (birefringence), when the liquid crystal polyester fiber is observed at a certain angle, the liquid crystal polyester fiber can be observed in a state where the entire fiber glows (in a bright field). When the stage is rotated by 45° from this state and the fiber is observed in a state where the entire fiber is dark (in a dark field), if there are unmelted particles, the portion thereof can be seen bright. Using this method, the number of unmelted particles having a long diameter (maximum diameter) size of 5 μm or larger was counted in the range of a fiber length of 5 cm. The number of unmelted particles was counted for five single fibers, and the average number thereof was regarded as the number of unmelted particles having a long diameter of 5 μm or larger included per 5 cm of a single fiber.

(Total Fineness and Single Fiber Fineness)

In accordance with 8.3.1 Method A in JIS L 1013: 2010, a liquid crystal polyester fiber was reeled into a hank (100 m in total) with 100 rounds each of which had 1 meter using a sizing reel "Wrap Reel by Motor Driven" produced by DAIEI KAGAKU SEIKI MFG. Co., Ltd., to measure a weight of the liquid crystal polyester fiber. The measurement was conducted twice for each sample. Each of the weights (g) was multiplied by 100, and the average value was regarded as a total fineness (dtex) of the liquid crystal polyester fiber. Thus-obtained total fineness was divided by the number of filaments in the liquid crystal polyester fibers so as to give a single-fiber fineness (dtex).

(Tensile Strength)

With reference to JIS L 1013: 2010 8.5.1, using an autograph "AGS-100B" produced by SHIMADZU CORPORATION, a tensile test was carried out under the conditions of a test sample length of 20 cm and a tensile speed of 10 cm/min 8 times for each sample yarn to obtain an average tensile strength (cN), and a tensile strength (cN/dtex) was calculated by dividing the average tensile strength (cN) by the total fineness (dtex) measured by the above-described method.

(Compressive Strength)

One single fiber was taken from liquid crystal polyester fibers (multifilament), and this single fiber was placed on a glass plate so as to protrude from an end portion thereof and was fixed thereto using an adhesive. The protruding single fiber was cut by a focused ion beam (FIB) device at a position away from the end portion of the glass plate by a length that was 1.5 times the fiber diameter. Accordingly, a sample, for measurement of the compressive strength of the single fiber, having a cross-section exactly orthogonal to the fiber axis was produced. Using a single fiber compression testing machine ("Model B20-049", produced by THK PRECISION CO., LTD.), an indenter was pressed against the cut surface of the sample for measurement at a speed of 200 nm/sec to obtain a pressing force-strain curve. This measurement was performed for each of five samples, and the average value of the pressing forces at the yield points of the pressing force-strain curves obtained from the five tests was calculated. The average pressing force was divided by the single fiber fineness measured by the above-described method to determine the single fiber compressive strength (cN/dtex).

(Coefficient of Variation of Single Fiber Fineness)

Fifteen single fibers were taken from liquid crystal polyester fibers (multifilament). Using "Denier Computer DC-11" produced by Search Co., Ltd., a single fiber fineness was measured under the conditions of applying an initial load of 0.1 g per 0.9 dtex to the single fiber having a measurement length of 50 mm. A value obtained by dividing a standard deviation of the measured values of the single fiber finenesses of the fifteen single fibers by an average value thereof and multiplying the resulting quotient by 100, was determined as a coefficient of variation (%) of the single fiber fineness.

(Disc Fatigue Test)

Six liquid crystal polyester fibers each having a total fineness of 280 dtex were combined (in the case of a total fineness of 170 dtex, ten fibers were combined such that the total fineness was about 1700 dtex) and were first-twisted (Z-twisted) with a twist number of 328 T/m, and three first-twisted strands were second-twisted (S-twisted) with a twist number of 268 T/m to produce a cord.

This cord was subjected to the following dipping process to obtain a dip cord.

First Time:

A dipping process was performed using a dipping liquid prepared by mixing 1 wt% of MARPOMERCE (70%; produced by Matsumoto Yushi-Seiyaku Co., Ltd.), 4 wt% of DENACOL EX313 (produced by Nagase ChemteX Corporation), 0.3 wt% of a sodium hydroxide aqueous solution (10%), and 94.7 wt% of water. Then, the dipped cord was dried at 150°C for 30 seconds, and then was heat-treated at 240°C for 30 seconds.

Second Time:

A dipping process was performed using an RFL liquid as a dipping liquid. Then, the dipped cord was dried at 150°C for 30 seconds, and then was heat-treated at 240°C for 30 seconds. The RFL liquid was prepared as follows. A liquid A was prepared by mixing 3.3 wt% of resorcinol, 2.46 wt% of formaldehyde (37%), 1.4 wt% of a sodium hydroxide aqueous solution (10%), and 32.2 wt% of water and was left to mature at a temperature of 25°C for 6 hours. A liquid B was prepared by mixing 52.86 wt% of a VP latex (JSR-0650; 40%; produced by JSR Corporation) and 7.78 wt% of water, was mixed with the matured liquid A, and then was left to mature at a temperature of 25°C for 16 hours to prepare the RFL liquid.

The obtained dipped cord was embedded in a rubber (SBR : NR = 1:1) and was vulcanized at 150°C for 30 minutes to produce a rubber composite specimen. With reference to JIS L 1017: 2002, a disc fatigue test was conducted by the Goodrich method under the following conditions.

Device: disc fatigue tester (produced by Mys-Shikenki Co., Ltd.)
Disc interval: 24.5 mm
Strain amount: 2% (elongation rate, compression rate)
Rotation speed: 2500 rpm
Temperature: 100°C
Number of times: 300,000

For each dipped cord taken out from the rubber composite specimen before and after the disc fatigue test, with reference to JIS L 1013: 2010 8.5.1, using an autograph "AGS-100B" produced by SHIMADZU CORPORATION, a tensile test was carried out under the conditions of a specimen length of 20 cm and a tensile speed of 10 cm/min 6 times for one sample, so as to determine an average tensile strength thereof as a tensile force (N) of each dipped cord before and after the disc fatigue test. A strength retention rate (%) was calculated from the following formula.

Strength retention rate (%) = (tensile force of dipped cord after disc fatigue test)/(tensile force of dipped cord before disc fatigue test) × 100

[Reference Example 1]

Into a reactor, were introduced 20.66 g (60 mol%) of 6-hydroxy-2-naphthoic acid, 7.91 g (20 mol%) of 2,6-naphthalenedicarboxylic acid, 3.02 g (15 mol%) of hydroquinone, 1.70 g (5 mol%) of 4,4'-dihydroxybiphenyl, 20.55 g of acetic anhydride, and 3.77 mg of potassium acetate as a polymerization catalyst. The mixture was acetylated under a nitrogen atmosphere (at 160°C for about 2 hours under reflux) and then kept at 280°C for 0.5 hours, at 320°C for 1 hour and at 360°C for 1 hour. Subsequently, vacuum treatment (100 Pa) was performed until it is confirmed that foaming has stopped (for 30 to 120 minutes), and then the reactor was purged with nitrogen to obtain a liquid crystal polyester. The obtained liquid crystal polyester had a weight-average molecular weight of 109000 and a melting point of 309°C.

[Reference Example 2]

Into a reactor, were introduced 19.74 g (60 mol%) of 6-hydroxy-2-naphthoic acid, 7.56 g (20 mol%) of 2,6-naphthalenedicarboxylic acid, 0.96 g (5 mol%) of hydroquinone, 4.88 g (15 mol%) of 4,4'-dihydroxybiphenyl, 19.64 g of acetic anhydride, and 3.77 mg of potassium acetate as a polymerization catalyst. The mixture was acetylated under a nitrogen atmosphere (at 160°C for about 2 hours under reflux) and then kept at 280°C for 0.5 hours, at 320°C for 1 hour and at 360°C for 2 hours. Subsequently, vacuum treatment (100 Pa) was performed until it is confirmed that foaming has stopped (for 30 to 120 minutes), and then the reactor was purged with nitrogen to obtain a liquid crystal polyester. The obtained liquid crystal polyester had a weight-average molecular weight of 91000 and a melting point of 302°C.

[Reference Example 3]

A liquid crystal polyester was obtained in the same manner as in Reference Example 1, except that the maximum

temperature during the polymerization reaction was changed to 365°C. The obtained liquid crystal polyester had a weight-average molecular weight of 167000 and a melting point of 320°C.

[Reference Example 4]

Into a reactor, were introduced 22.64 g (73 mol%) of 4-hydroxybenzoic acid, 11.41 g (27 mol%) of 6-hydroxy-2-naphthoic acid, 23.38 g of acetic anhydride, and 3.77 mg of potassium acetate. The mixture was acetylated under a nitrogen atmosphere (at 160°C for about 2 hours under reflux) and then kept at 250°C for 0.5 hours, at 280°C for 1 hour and at 320°C for 1 hour. Subsequently, vacuum treatment (100 Pa) was performed for 30 minutes. After confirming that foaming had stopped, the reactor was purged with nitrogen to obtain a liquid crystal polyester. The obtained liquid crystal polyester had a weight-average molecular weight of 159000 and a melting point of 278°C.

[Example 1]

Chips (granular molded bodies) of the liquid crystal polyester obtained in Reference Example 1 were dried by hot air at 120°C for at least 4 hours. Then, the chips were fed into a twin-screw extruder (Φ 15 mm) ("KZW15TW-45MG-NH (-700)", produced by TECHNOVEL CORPORATION) to be melt-kneaded at a heater temperature of 330°C and a screw circumferential speed of 18 m/min, and the melt-kneaded material was fed to a spinning head with being metered by a gear pump. In this process, a vacuum pump (dry pump "KRF40A-V-01B", produced by ORION Machinery Co., LTD.) was connected via a metal pipe to a vent portion, which was provided in the middle of the twin-screw extruder, to reduce the pressure in the space not filled with the resin in the twin-screw extruder to 50 kPa. The temperature in the range from the extruder outlet to the spinning head was set to 330°C, and the spinneret temperature was set to 315°C. The spinning head was equipped with a spinneret having 50 holes each having a hole diameter of 0.10 mmφ and a land length of 0.14 mm, and the melt-kneaded material was discharged at a discharge rate of 28 g/min and wound onto a bobbin at a winding rate of 1000 m/min to obtain as-spun fibers of liquid crystal polyester fibers. At this time, a 2 wt% aqueous solution of sodium dodecyl phosphate (available from FUJIFILM Wako Pure Chemical Corporation, Wako first grade) was applied to the as-spun fibers through an oiling guide placed directly below the spinneret. The amount of the aqueous solution applied was 1.4 g/min, and the adhesion proportion of sodium dodecyl phosphate to the as-spun fibers was 0.1 wt% as a calculation value.

Next, 500 m of the as-spun fibers obtained in the above process was rewound onto an aluminum bobbin at a winding density of 0.6 g/cm$^3$, and subjected to a heat treatment process under a nitrogen atmosphere using a closed oven at temperatures raised stepwise from room temperature. After the temperature reached 300°C, heat treatment was performed at 300°C for 8 hours to obtain heat-treated fibers of liquid crystal polyester filaments. The analysis results of the obtained liquid crystal polyester fibers are shown in Table 5.

[Example 2]

Liquid crystal polyester fibers were obtained in the same manner as in Example 1, except that the liquid crystal polyester obtained in Reference Example 2 was used, and in the spinning process, the heater temperature of the extruder and the temperature in the range from the extruder outlet to the spinning head were set to 320°C, and the spinneret temperature was set to 310°C.

[Example 3]

Liquid crystal polyester fibers were obtained in the same manner as in Example 1, except that in the spinning process, a spinneret having 100 holes each having a hole diameter of 0.08 mmφ and a land length of 0.11 mm was used, and the discharge rate was set to 17 g/min.

[Example 4]

Liquid crystal polyester fibers were obtained in the same manner as in Example 1, except that in the spinning process, the screw circumferential speed of the extruder was set to 15 m/min, the heater temperature of the extruder and the temperature in the range from the extruder outlet to the spinning head were set to 325°C, and the spinneret temperature was set to 315°C.

[Example 5]

Liquid crystal polyester fibers were obtained in the same manner as in Example 1, except that in the spinning

process, the spinneret temperature was set to 320°C.

[Example 6]

Liquid crystal polyester fibers were obtained in the same manner as in Example 1, except that the heat treatment was performed on the as-spun fibers at 330°C for 8 hours.

[Comparative Example 1]

Liquid crystal polyester fibers were obtained in the same manner as in Example 1, except that in the spinning process, the screw circumferential speed of the extruder was set to 7 m/min.

[Comparative Example 2]

Liquid crystal polyester fibers were obtained in the same manner as in Example 1, except that in the spinning process, the screw circumferential speed of the extruder was set to 45 m/min.

[Comparative Example 3]

Liquid crystal polyester fibers were obtained in the same manner as in Example 1, except that in the spinning process, the heater temperature of the extruder and the temperature in the range from the extruder outlet to the spinning head were set to 320°C and the spinneret temperature was set to 310°C.

[Comparative Example 4]

Liquid crystal polyester fibers were obtained in the same manner as in Example 1, except that in the spinning process, the spinneret temperature was set to 340°C.

[Comparative Example 5]

Liquid crystal polyester fibers were obtained in the same manner as in Example 1, except that in the spinning process, the heater temperature of the extruder and the temperature in the range from the extruder outlet to the spinning head were set to 360°C and the spinneret temperature was set to 350°C.

[Comparative Example 6]

Liquid crystal polyester fibers were obtained in the same manner as in Example 1, except that the liquid crystal polyester obtained in Reference Example 3 was used, and in the spinning process, the heater temperature of the extruder and the temperature in the range from the extruder outlet to the spinning head were set to 340°C and the spinneret temperature was set to 325°C.

[Comparative Example 7]

As-spun fibers were obtained in the same manner as in Example 1, except that the liquid crystal polyester obtained in Reference Example 4 was used, and in the spinning process, the heater temperature of the extruder and the temperature in the range from the extruder outlet to the spinning head were set to 310°C and the spinneret temperature was set to 310°C. Next, liquid crystal polyester fibers were obtained in the same manner as in Example 1, except that the heat treatment was performed on the obtained as-spun fibers at 270°C for 5 hours.

[Comparative Example 8]

Liquid crystal polyester fibers were obtained in the same manner as in Example 1, except that the heat treatment was performed on the as-spun fibers at 245°C for 8 hours.

[Comparative Example 9]

Liquid crystal polyester fibers were obtained in the same manner as in Example 1, except that the heat treatment was performed on the as-spun fibers at 355°C for 8 hours.

[Table 5]

| | | Ex. 1 | Ex. 2 | Ex. 3 | Ex. 4 | Ex. 5 | Ex. 6 |
|---|---|---|---|---|---|---|---|
| Liquid crystal polyester | Weight-average molecular weight | 109000 | 91000 | 109000 | 109000 | 109000 | 109000 |
| | Melting point $Mp_0$ [°C] | 309 | 302 | 309 | 309 | 309 | 309 |
| | Melt viscosity [Pa·s] | 10 | 6 | 10 | 10 | 10 | 10 |
| Spinning step | Screw circumferential speed [m/min] | 18 | 18 | 18 | 15 | 18 | 18 |
| | Extruder temperature [°C] | 330 | 320 | 330 | 325 | 330 | 330 |
| | Spinneret temperature [°C] | 315 | 310 | 315 | 315 | 320 | 315 |
| | Number of single yarn breaks [number/1 h] | 0 | 0 | 0 | 0 | 0 | 0 |
| As-spun yarn | Total fineness [dtex] | 280 | 280 | 170 | 280 | 280 | 280 |
| | Single fiber fineness [dtex] | 5.6 | 5.6 | 1.7 | 5.6 | 5.6 | 5.6 |
| | Number of filaments | 50 | 50 | 100 | 50 | 50 | 50 |
| | Tensile strength [cN/dtex] | 6.8 | 7.0 | 6.8 | 6.7 | 6.8 | 6.8 |
| Heat-treating step | Heat treatment temperature [°C] | 300 | 300 | 300 | 300 | 300 | 330 |
| | Heat treatment period [h] | 8 | 8 | 8 | 8 | 8 | 8 |
| Heat-treated fibers | Number of unmelted particles [number/5 cm] | 0.8 | 1.0 | 1.0 | 1.2 | 0.0 | 0.6 |
| | Number of voids [number/5 cm] | 0.0 | 0.0 | 0.0 | 0.2 | 0.0 | 0.0 |
| | Melting point [°C] | 350 | 349 | 349 | 349 | 350 | 355 |
| | Degree of crystallinity [%] | 50 | 50 | 50 | 48 | 49 | 58 |
| | Degree of orthorhombic crystallinity [%] | 28 | 28 | 27 | 26 | 28 | 30 |
| | Degree of orientation [%] | 97 | 97 | 97 | 96 | 97 | 97 |
| | Tensile strength [cN/dtex] | 32 | 30 | 29 | 27 | 32 | 28 |
| | Single fiber compressive strength [cN/dtex] | 0.85 | 0.80 | 0.90 | 0.75 | 0.93 | 0.74 |
| | Coefficient of variation of single fiber fineness [%] | 5 | 6 | 6 | 5 | 5 | 5 |
| | Disc fatigue test Strength retention ratio [%] | 65 | 62 | 61 | 60 | 68 | 55 |

| | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|
| Liquid crystal polyester | Weight-average molecular weight | 109000 | 109000 | 109000 | 109000 | 109000 | 167000 | 159000 | 109000 | 109000 |
| | Melting point $Mp_0$ [°C] | 309 | 309 | 309 | 309 | 309 | 320 | 278 | 309 | 309 |
| | Melt viscosity [Pa·s] | 10 | 10 | 10 | 10 | 10 | 28 | 50 | 10 | 10 |
| Spinning step | Screw circumferential speed [m/min] | 7 | 45 | 18 | 18 | 18 | 18 | 18 | 18 | 18 |
| | Extruder temperature [°C] | 330 | 330 | 320 | 330 | 360 | 340 | 310 | 330 | 330 |
| | Spinneret temperature [°C] | 315 | 315 | 310 | 340 | 350 | 325 | 310 | 315 | 315 |
| | Number of single yarn breaks [number/1 h] | 2 | 4 | 8 | 6 | 10 | 2 | 0 | 0 | 0 |
| As-spun yarn | Total fineness [dtex] | 280 | 280 | 280 | 280 | 280 | 280 | 280 | 280 | 280 |
| | Single fiber fineness [dtex] | 5.6 | 5.6 | 5.6 | 5.6 | 5.6 | 5.6 | 5.6 | 5.6 | 5.6 |
| | Number of filaments | 50 | 50 | 50 | 50 | 50 | 50 | 50 | 50 | 50 |
| | Tensile strength [cN/dtex] | 6.7 | 6.7 | 6.8 | 6.6 | 7.0 | 8.0 | 9.0 | 6.8 | 6.8 |
| Heat treatment step | Heat treatment temperature [°C] | 300 | 300 | 300 | 300 | 300 | 300 | 270 | 245 | 355 |
| | Heat treatment period [h] | 8 | 8 | 8 | 8 | 8 | 8 | 5 | 8 | 8 |
| Heat-treated yarn | Number of unmelted particles [number/5 cm] | 5.0 | 2.0 | 7.0 | 0.2 | 1.4 | 6.0 | 1.0 | 0.8 | 0.6 |
| | Number of voids [number/5 cm] | 1.0 | 4.0 | 1.0 | 5.0 | 8.0 | 1.0 | 0.0 | 0.0 | 0.0 |
| | Melting point [°C] | 344 | 344 | 344 | 345 | 345 | 340 | 330 | 330 | 366 |
| | Degree of crystallinity [%] | 46 | 46 | 46 | 47 | 47 | 41 | 45 | 40 | 62 |
| | Degree of orthorhombic crystallinity [%] | 25 | 25 | 25 | 25 | 25 | 27 | 14 | 15 | 35 |
| | Degree of orientation [%] | 95 | 95 | 96 | 95 | 95 | 97 | 97 | 94 | 98 |
| | Tensile strength [cN/dtex] | 26 | 26 | 25 | 25 | 26 | 24 | 24 | 20 | 22 |
| | Single fiber compressive strength [cN/dtex] | 0.55 | 0.63 | 0.50 | 0.60 | 0.62 | 0.50 | 0.63 | 0.65 | 0.59 |
| | Coefficient of variation of single fiber fineness [%] | 7 | 9 | 7 | 12 | 10 | 8 | 5 | 5 | 6 |
| | Disc fatigue test Strength retention ratio [%] | 46 | 46 | 43 | 46 | 42 | 45 | 38 | 40 | 36 |

As shown in Table 5, in Examples 1 to 6, since a specific liquid crystal polyester was used as a raw material resin and melt-kneading and melt-spinning were performed under specific conditions, unmelted particles and voids can be reduced, and the melting point and the degree of crystallinity can be adjusted to be in specific ranges. Therefore, the liquid crystal polyester fibers of Examples 1 to 6 have excellent tensile strength and compressive strength, have excellent disc fatigue resistance, and have excellent uniformity of the single fiber fineness.

On the other hand, in Comparative Examples 1 to 5, although the raw material resin of the same liquid crystal polyester as in Examples 1 and 3 to 6 was used, the temperature at the extruder, the screw circumferential speed, or the spinneret temperature was not in the specific range, and therefore, there were many unmelted particles or voids. Therefore, compared to Examples 1 to 6, the liquid crystal polyester fibers of Comparative Examples 1 to 5 have lower tensile strength and compressive strength and have inferior disc fatigue resistance, and the coefficient of variation of the single fiber fineness is large, causing variation.

In Comparative Example 6, since the weight-average molecular weight of the liquid crystal polyester as the raw material resin was large, the liquid crystal polyester was difficult to melt in the extruder, resulting in remaining unmelted particles. In addition, probably due to the low mobility of the molecular chains, the molecular chains could not be densely packed during heat treatment, resulting in failing to increase the degree of crystallinity. Therefore, compared to Examples 1 to 6, the liquid crystal polyester fibers of Comparative Example 6 have lower tensile strength and compressive strength and have inferior disc fatigue resistance, and the coefficient of variation of the single fiber fineness is large, causing variation.

In Comparative Example 7, since the melting point of the liquid crystal polyester as the raw material resin was low, even though heat treatment was performed on the as-spun fibers, the melting point could not be sufficiently increased. Therefore, the liquid crystal polyester fibers of Comparative Example 7 have lower heat resistance than that of Examples 1 to 6.

In Comparative Examples 8 and 9, there were few unmelted particles or voids, but the degree of crystallinity was outside the specific range. Therefore, compared to Examples 1 to 6, the liquid crystal polyester fibers of Comparative Examples 8 and 9 have lower tensile strength and compressive strength and have inferior disc fatigue resistance.

## INDUSTRIAL APPLICABILITY

The liquid crystal polyester fiber according to the present invention can be used for various applications such as general industrial materials, civil engineering and construction materials, various reinforcing materials, electrical and electronic component materials, and protective clothing, and can be used as a reinforcing fiber for a composite material, for example.

Although the preferred embodiments of the present invention have been described, various additions, modifications, or deletions may be made without departing from the scope of the invention. Accordingly, such variants are included within the scope of the present invention.

## Claims

1. A liquid crystal polyester fiber having a melting point of 335°C or higher and lower than 360°C as measured by a differential scanning calorimeter under a nitrogen atmosphere at a temperature elevation rate of 10°C/min, and having a degree of crystallinity of from 45 to 60%,
   wherein a total number of unmelted particles and voids having a long diameter of 5 μm or larger is 3 or less per 5 cm length of a single fiber.

2. The liquid crystal polyester fiber according to claim 1, having a degree of orthorhombic crystallinity of 20% or more in a crystal component.

3. The liquid crystal polyester fiber according to claim 1 or 2, having a degree of orientation of 97% or more and less than 100% in a fiber axis direction in a crystal component.

4. The liquid crystal polyester fiber according to claim 1 or 2, having a tensile strength of 27 cN/dtex or more.

5. The liquid crystal polyester fiber according to claim 1 or 2, having a single fiber compressive strength of 0.70 cN/dtex or more.

6. The liquid crystal polyester fiber according to claim 1 or 2, having a single fiber fineness of 7 dtex or less and a coefficient of variation of the single fiber fineness of 7% or less.

**7.** A fiber structure at least partially comprising the liquid crystal polyester fiber as recited in claim 1 or 2.

**8.** A composite material comprising the liquid crystal polyester fiber as recited in claim 1 or 2 as a reinforcing fiber.

**9.** A method for producing the liquid crystal polyester fiber as recited in claim 1 or 2, the method at least comprising:

spinning a liquid crystal polyester to obtain an as-spun fiber, the liquid crystal polyester having a weight-average molecular weight of 50000 or more and 160000 or less as measured by GPC in terms of polystyrene and a melting point $Mp_0$ of 300°C or higher as measured by a differential scanning calorimeter under a nitrogen atmosphere at a temperature elevation rate of 10°C/min, and the spinning satisfying the following conditions (1) to (3):

(1) an extruder temperature is from $Mp_0$ + 15°C to $Mp_0$ + 35°C,
(2) a screw circumferential speed of an extruder is from 10 to 40 m/min, and
(3) a spinneret temperature is from the extruder temperature - 15°C to the extruder temperature - 5°C; and

heat-treating the obtained as-spun fiber.

**10.** The method according to claim 9, wherein the extruder is a twin-screw extruder.

**11.** The method according to claim 9, wherein a heat treatment temperature is from 250 to 350°C.

## INTERNATIONAL SEARCH REPORT

International application No.
**PCT/JP2023/043770**

**A. CLASSIFICATION OF SUBJECT MATTER**

***D01F 6/84***(2006.01)i; ***D01F 6/62***(2006.01)i
FI: D01F6/84 311; D01F6/62 308; D01F6/84 303B

According to International Patent Classification (IPC) or to both national classification and IPC

**B. FIELDS SEARCHED**

Minimum documentation searched (classification system followed by classification symbols)

D01F6/84; D01F6/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2008/105439 A1 (TORAY INDUSTRIES, INC.) 04 September 2008 (2008-09-04) example 20, paragraphs [0043]-[0044] | 1-11 |
| A | JP 2011-202290 A (TORAY INDUSTRIES, INC.) 13 October 2011 (2011-10-13) example 1 | 1-11 |
| A | JP 2014-167174 A (TORAY INDUSTRIES, INC.) 11 September 2014 (2014-09-11) example 4, paragraphs [0106], [0109] | 1-11 |
| A | WO 2021/205757 A1 (KURARAY CO., LTD.) 14 October 2021 (2021-10-14) example 12 | 1-11 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/043770**

| Patent document cited in search report | Publication date (day/month/year) | Patent family member(s) | Publication date (day/month/year) |
|---|---|---|---|
| WO 2008/105439 A1 | 04 September 2008 | EP 2123807 A1<br>example 20, paragraphs [0043]-[0044]<br>JP 2008-240230 A<br>JP 2008-240228 A<br>US 2010/0104870 A1<br>US 2014/0106169 A1<br>EP 2594668 A1<br>CN 101622384 A<br>KR 10-2009-0115227 A<br>TW 200902782 A<br>CN 103122493 A | |
| JP 2011-202290 A | 13 October 2011 | (Family: none) | |
| JP 2014-167174 A | 11 September 2014 | (Family: none) | |
| WO 2021/205757 A1 | 14 October 2021 | EP 4134473 A1<br>example 12<br>US 2023/0055144 A1<br>KR 10-2022-0140861 A<br>CN 115398048 A<br>TW 202144636 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022199789 A
- WO 2019142692 A
- JP 2010043380 A
- JP 2022006590 A